# EUROPEAN PATENT SPECIFICATION

(11) **EP 0 563 095 B1**
(45) Date of publication and mention of the grant of the patent: **22.04.1998**
(21) Application number: 92900587.4
(22) Date of filing: 16.12.1991
(51) Int. Cl.: G06K 7/14

(54) **Locating and identifying procedure and system**
Verfahren und System zur Lokalisierung und Identifizierung
Procédé et système de localisation et d' identification

(30) Priority: 17.12.1990 FI 906225
(43) Date of publication of application: 06.10.1993
(73) Proprietor: RANTALAINEN, Erkki, SF-52300 Ristiina (FI)
(72) Inventor: RANTALAINEN, Erkki, SF-52300 Ristiina (FI)
(74) Representative: Pellmann, Hans-Bernd, Dipl.-Ing.
(86) International application number: FI9100390
(87) International publication number: WO9211607

(56) References cited:
- WO-A-88/01080
- US-A- 3 313 941
- US-A- 3 800 282
- US-A- 3 801 775
- US-A- 4 544 836
- US-A- 4 638 171
- US-A- 4 906 829
- US-A- 4 924 078

## Description

The present invention concerns an identifying procedure as specified in the preamble to Claim 1, and an identifying system for observing and identifying a visual object, as defined in the preamble to Claim 15.

An indentifying procedure and an identifying system comprising the features of the preamble to claims 1 and 15, respectively, are known from WO 88/01080.

Automatic identification of a visual object or mark is difficult owing to the abundance of signals. The location and attitude of the object to be identified are not always known in advance. The object may be partly covered with dirt or the like, so that observation of the object and, for instance, aiming and focussing a camera or equivalent serving as identifier, on the object to be identified is impossible, or difficult at least.

The object of the invention is to eliminate the drawbacks mentioned. It is particularly an object of the invention to enable locating and identifying of various visual objects in a reliable, accurate and rapid manner even if the object should be located far away.

According to the present invention, the above objects are achieved by a procedure for locating and identifying a visual object wherein the visual object is marked with a polarizing surface provided in the region of the object, the observation of the existence, and the location of the polarizing surface, is accomplished by utilizing the lighting prevailing at the surface and in its ambience, on the basis of the polarized light coming from said polarizing surface, wherein the relative positioning of the surface and the visual object is known, and the location of the object to be identified is accomplished on the basis of said known relative positioning after which the object is identified in another way than on the basis of polarization.

Moreover, the above objects are achieved by a system for locating and identifying a visual object comprising in the region of the visual object a separate polarizing surface or separate polarizing surfaces, means for observing the existence of and locating the polarizing surface or surfaces by utilizing the lighting prevailing at the surface thereof and in its/their ambience, on the basis of the polarized light coming from said polarizing surface or surfaces, said means comprising an identifying apparatus including image identifying means, in which is provided a divider means for dividing the polarized light reflected by the polarized surface or surfaces into two parts on the basis of polarization, wherein the separate polarizing surface has a known shape and/or known direction of polarization, or the separate polarizing surfaces have different polarizing properties, and the relative positioning of the polarizing surface or surfaces and the visual object is known, and wherein the system further comprises means for determining the location of the visual object to be identified on the basis of said known relative positioning, and means for identifying the object in another way than on the basis of polarization.

In the identifying procedure of the invention the object to be identified is marked with at least one polarizing surface area provided either on the object or in conjunction with the object, i.e., in the region, or vicinity, of the object, observation of the object being accomplished with the aid of polarized light reflected by the polarizing surface. It is thus understood that observation of the object takes place, in the invention, by utilizing the illumination present at the object and in its ambience, on the basis of polarized light coming from the polarizing surface. Since no similar polarized light exists inherently in nature, the polarized light emitted by the surfaces serving as markers is easy to distinguish from other ambient light and radiation. As taught by the invention, the polarizing surfaces act merely as locators of the object that is to be identified.

Advantageously in the procedure of the invention, a polarized surface is placed in the vicinity of the object to be identified, so that the positioning of the polarizing surface and of the object to be identified is known, in which case when the easily observable polarizing surface is first found, the object meant to be identified can also be located with its aid.

Since polarizing surface coatings do not alter the appearance of an object, one may upon the object to be identified attach a transparent polarizing film which supplies the information needed in the locating process, while identification of the object itself is accomplished in another way. It should be noted, however, that at a location with black background no polarization can be discerned because a black area reflects no radiation whatsoever.

If the object to be examined may present itself in arbitrary attitude relative to the identifying apparatus, it will be advantageous to use a polarizer producing light with circular polarization. The attitude and inclination of the object can be found by calculation if the polarized area is made asymmetric, e.g. in the shape of a letter L. It is then possible from the image to calculate the true attitude relative to the identifier from the ratio of the side lengths and from the angle between the sides and, if desired, to rotate the object in the image into normal position.

The attitude of the object can also be determined if the object is marked with two different-handed circular polarizers which are positioned in known manner relative to the object.

If the size of the object is known, the distance of the object can be calculated with the aid of the angle of view. The object may itself carry information on the object's size.

If the object is far away, or if the image of the object is small for any other reason, it is conceivable that both polarized light and unpolarized light from an adjacent area impinge on one surface element in the identifying apparatus. The identifying apparatus will then identify the light falling on such an area as partly polarized. It is then possible to examine such a location by zooming on it, and to check whether there is an object in the area.

It is advantageous to use for image identifying means a camera in which the image is formed at two separate locations so that the light which is horizontally polarized relative to the camera and that which is vertically polarized thereto are directed to go to separate images. If the object is marked with circular polarizers, the circularly polarized light is converted to linearly polarized light prior to its division into separate images. This conversion can be accomplished with a suitable delay element, such as a lambda/4 plate for instance, which is placed under a suitable angle relative to the camera. It is possible by comparing, in the images, the luminance values of equivalent points to find the polarized areas, if any, and the object to be identified can be observed. The object may also be transferred to a monitor or recorded for later scrutiny.

The visual object-identifying system of the invention comprises appropriate image identifying means, for which suitable cameras, for instance may be used. As taught by the invention, the system comprises a polarizing surface, or several surfaces, of known shape and with known polarizing characteristics, placed in the region of the object to be identified. Furthermore, in the system the image identifying means are incorporated in an identifying apparatus, which, if required, includes a suitable delay element for converting circularly polarized light to linearly polarized light, and a divider means by which the incoming light is divided into two parts in accordance with its direction of polarization.

For divider, a crystal is advantageously used which has a division interface admitting light with a given direction of polarization to pass through but reflecting any light which is polarized at right angles against the first direction. It is also feasible to use for divider, a birefringent crystal or a semitransparent mirror in conjunction with which polarization filters are provided.

If the camera which is employed handles a two-dimensional image, the object can be observed and identified with one single exposure even if the image should be two-dimensional and even if it should present itself with arbitrary attitude.

If the camera only handles a one-dimensional image, it is advantageous to use a one-dimensional object on which the information has been encoded in bar code fashion. The polarized area is positioned in a line with the code. When the identifier apparatus observes a polarized area, the code itself is also-readable in the same image. If the attitude of the object is not known in advance, the code may be composed of concentric rings, and the polarizing area used as detector is placed in the centre of the area. When the identifying apparatus observes a polarized area, the code will be found in the image on either side of the polarized area. In order to bring the object into the image, it may be necessary to move either the object or the identifying apparatus.

The procedure and system of the invention may be used in the following applications, among others.

Various traffic signs and signals used in road traffic can be marked with a suitable polarizing surface, whereby they can be automatically recorded with appropriate instruments and displayed in a suitable manner and at a suitable occasion e.g. before the driver 5 eyes. Speed limits, for instance may be automatically recorded by an apparatus provided in the vehicle, where they can be looked up when needed.

Another potential application of the invention is marking pieces and goods in automated production, transport and storage. In storage operations, when the objects to be stored are marked with codes, such code markings as are used may be encircled, or otherwise marked, with polarizing surfaces so that they are easy to observe, and to record, with automatic identifying apparatus, even from great distance. Likewise, the system is applicable e.g. in goods transport in recording the flow of wagons and case goods, and in production plants in recording and directing the products moving on production lines.

The invention may also be applied in determining the location and/or attitude of a body, or of another equivalent object. The body is marked with a polarizing surface, or surfaces, placed in known manner relative to the body. As soon as the location and attitude of the polarizing surface have been found, the location and attitude of the body itself can also be determined.

With the aid of observations which are consecutive in time, the quantities associated with a body's state of motion can be found, such as its velocity, acceleration, speed of rotation, etc.

The advantage afforded by the procedure and system of the invention over the state of art is simple, fast and accurate automatic observation and identification of various objects, signs, codes, signals and equivalent. Since the analysis is made within one image frame, any proper movement of the object exerts an influence only within the limits of the time of exposure.

The invention differs from the methods of prior art in that the object is marked with a polarizing surface, or surfaces, and the identifying apparatus analyses the sector of space in front of it, searching for polarized areas therein. As soon as a polarized area or areas have been observed, the location and attitude of the object are known on the basis thereof. Identification of the object itself thereafter takes place otherwise than on the basis of polarization. In connection with the identification system, aimed lighting may be used in order to increase the lighting intensity, but no scanning beam is required for identification. In other words, it is not necessary in the system of the invention to hunt for polarizing surfaces or objects in presumed areas by means of light beams which go through, or sweep, such areas; instead, the general illumination prevailing in the space under observation, such as natural light outdoors, is enough for the system of the invention to find in this space any completely polarized light and, on its basis, the object to be identified.

Electromagnetic radiation with a wavelength shorter or longer than that of visible light may equally be sed to observe and identify the object.

Also elements other than a polarizing plate or sheet may be used towards marking the object: for instance, a plate or sheet reflecting or transmitting only certain given wavelengths from the radiation. The marker plate/sheet can then be distinguished from the ambience at large with the aid of the spectrum coming from the plate/sheet. Different wavelengths are directed to go to different images in the identifier. This is accomplished either in that a divider means divides the radiation on the basis of wavelength, or in that filters are used after the divider.

In the following the invention is described in detail with reference to the attached drawing, wherein
Fig. 1 presents, schematically, an identifying system according to the invention,
Fig. 2 presents a practical application of the invention,
Fig. 3 illustrates a practical application of the invention in which the task is to identify a one-dimensional code with known attitude, and
Fig. 4 illustrates an application in which the task is to identify a one-dimensional code with arbitrary attitude.

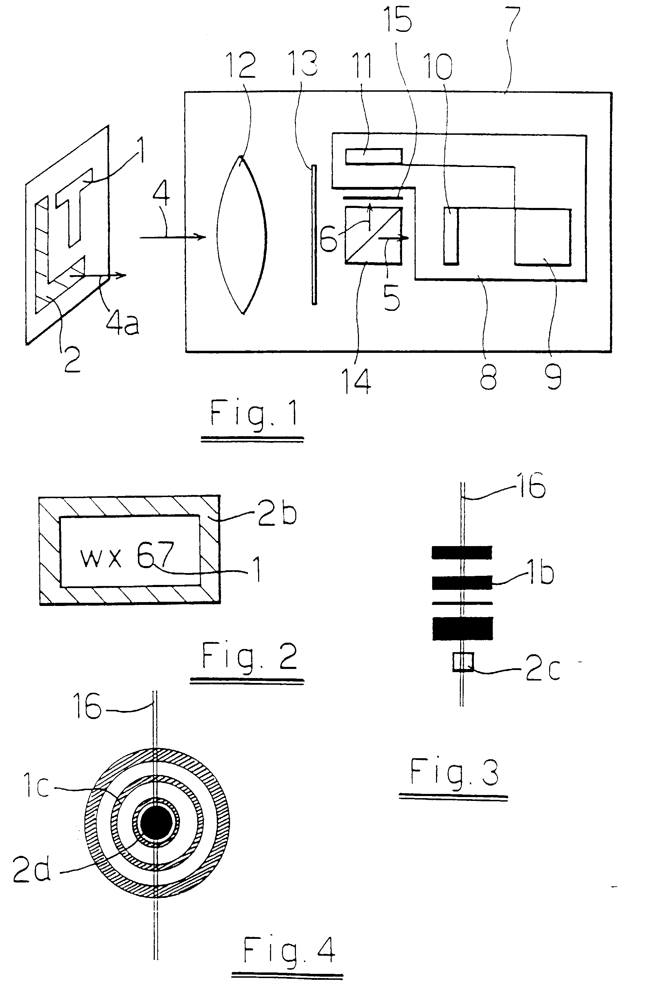

The visual object-identifying system depicted in Fig. 1 comprises an identifying apparatus 7 including an image identifying means 8 consisting of an analyzer 9 and image surfaces 10 and 11. The light 4 incident on the apparatus is after the objective 12 directed to a crystal 14 provided with a dividing interface and serving as divider means, where the vertically polarized component 5 and the horizontally polarized component 6 of the incident light 4 are separated. The images are formed on the image surfaces 10 and 11.

In the vicinity of the object 1 a letter L-shaped polarizing surface 2 has been placed.

The system according to the invention is operated as follows. When one desires to find and identify the object 1, it is observed with the aid of the polarized light 4a emitted by the polarizing surface 2, because no such light normally occurs in nature. In order that the object 1 could be identified with ease and accuracy, its direction and attitude must be discovered. Since the object 1 which shall be identified is known to be in a certain position relative to the polarizing surface 2, definition of the exact location and attitude of the polarizing surface is enough. This is accomplished as follows.

On the image surfaces 10 and 11 of the identifying apparatus 7 two images of the space sector in front of the identifying apparatus are formed. One image is produced by the horizontal and the other by the vertical component of the light incident on the divider. If the object is marked with a circularly polarizing surface, the circularly polarized light must prior to the divider be converted to linearly polarized light. This is accomplished e.g. with a lambda/4 plate 13 in appropriate position.

When there is an object marked with a polarized area in front of the identifier, the two images differ at the location of the polarized area so that the luminosity is significantly higher in one image than in the other. If only one kind of polarizer plate/sheet is used, the brighter image of the polarized area will always be seen on one and the same image surface. The search for the polarized area can be simplified, and interference can be reduced, by placing an attenuator 15 before the respective image surface. Suitable for use as attenuator is a polarizer plate; the strength of attenuation can then be regulated by rotating the plate. The power of the attenuator is adjusted to be such that at the locations of polarized areas the points of said image surface are brighter than the equivalent points on the other image surface, while at any other location the image is less bright than in the other image.

The attitude and shape of the polarized area on the image surface are then found by comparing luminosity values at equivalent points in both images.

When furthermore the true shape of the polarizing surface 2 is known, it becomes possible with the aid of the length ratios and angles in the projection image to determine the attitude of the object and its inclination against the direction of observation. The image obtained from the image surface of the camera can be converted to its normal position by calculation. The object 1 to be identified is thereafter easy to record and to identify. If the size of the object is known, its distance can be calculated. Or, if the distance is known, the size can be calculated.

In Fig. 2 is depicted another embodiment of the invention wherein the object 1 to be identified, a suitable code of letters or numerals, is encircled with a polarizing surface 2b. Hereby the polarizing surface delimits from a larger area a sharply defined area in which the code that is being used is rather easy to read with the aid of conventional image identifying means.

In Fig. 3 is shown an example of an embodiment in which the object to be identified is a one-dimensional code 1b in known attitude. The polarizer 2c has been placed in a line with the code, in front of the initial end of the code. The object is easy to observe and to identify with an identifier handling a one-dimensional image. When there is an image of the space slice 16 on the image surfaces of the identifier, the polarization is observed, and the code can be interpreted at the moment.

In Fig. 4 is seen an example of an embodiment in which the task is to identify a one-dimensional code with arbitrary attitude. The code is represented by concentric rings 1c. The polarizer 2d is placed in the centre of these rings. When there is an image of the strip 16 in the camera, the code is found on either side of the polarized area.

In the search for a one-dimensional code which has been coded in a line with known attitude or in the form of concentric rings, the amount of light incident on the image surfaces of the identifier can be augmented by reducing the image formed in the identifier, in the direction perpendicular against the space slice.

In the foregoing the invention has been described by way of example with the aid of the attached drawings, while different embodiments of the invention are conceivable within the scope of the invention defined in the claims.

## Claims

1. Procedure for locating and identifying a visual object wherein:
- the visual object (1,1b,1c) is marked with a polarizing surface (2;2b;2c;2d) provided in the region of the object;
- the observation of the existence, and the location of the polarizing surface, is accomplished by utilizing the lighting prevailing at the surface and in its ambience, on the basis of the polarized light (4a) coming from said polarizing surface;
**characterized in that**
- the relative positioning of the surface (2;2b;2c;2d) and the visual object (1;1b;1c) is known; and
- the location of the object to be identified is accomplished on the basis of said known relative positioning after which the object is identified in another way than on the basis of polarization.

2. Procedure according to claim 1, **characterized in that** the polarizing surface (2;2b;2c;2d) is placed in the vicinity of the visual object (1;1b;1c).

3. Procedure according to claim 1, **characterized in that** the polarizing surface is placed to cover the visual object (1;1b;1c) totally or in part.

4. Procedure according to any of claims 1 to 3, **characterized in that** a surface with asymmetric shape is used as said polarizing surface (2).

5. Procedure according to any of claims 1 to 3, **characterized in that** polarizing surfaces with different polarizing properties are used to mark the visual object (1;1b;1c).

6. Procedure according to any of claims 1 to 5, **characterized in that** the attitude of the visual object (1) is identified with the aid of the shape and the position relative to each other of an asymmetric surface (2) or of different polarizing surfaces.

7. Procedure according to any of claims 1 to 6, **characterized in that** the distance of the visual object (1;1b;1c) is identified with the aid of a polarizing surface of known size.

8. Procedure according to any of claims 1 to 7, **characterized in that** the projection image of the visual object (1) is rotated into an identifying position with the aid of the shape of a known polarizing surface (2) or of the shape and position relative to each other of different polarizing surfaces.

9. Procedure according to any of claims 1 to 8, **characterized in that** the vertically and horizontally polarized components (5,6) of the light incident on the identifier are separated into two separate images, comparison of said images being performed to observe the polarized light, if any, and the existence of the visual object (1;1b;1c) thus being ascertained.

10. Procedure according to any of claims 1 to 9, **characterized in that** if at first only partially polarized light is observed, the respective location is zoomed up and an examination is made whether there is any completely polarized light in the area.

11. Procedure according to any of claims 1 to 10, **characterized in that** the procedure is used to determine the attitude and location of a body.

12. Procedure according to any of claims 1 to 11, **characterized in that** with the aid of observations consecutive in time the quantities associated with a body's state of motion are found.

13. Procedure according to any of claims 1 to 12, **characterized in that** observation and identification of the visual object takes place with electromagnetic radiation with a wavelength longer or shorter than that of visible light, instead of visible light.

14. Procedure according to any of claims 1 to 13, **characterized in that** instead of a polarizing plate/sheet a plate/sheet is used the spectrum of the radiation reflected or transmitted by which differs from the spectrum of the ambient radiation.

15. System for locating and identifying a visual object (1,1b,1c) comprising:
- in the region of the visual object (1;1b;1c) a separate polarizing surface or separate polarizing surfaces (2;2b;2c;2d);
- means (9,10,11) for observing the existence of and locating the polarizing surface or surfaces by utilizing the lighting prevailing at the surface thereof and in its/their ambience, on the basis of the polarized light (4a) coming from said polarizing surface or surfaces, said means comprising an identifying apparatus (7) including image identifying means (8), in which is provided a divider means (14) for dividing the polarized light reflected by the polarized surface or surfaces into two parts on the basis of polarization;
**characterized in that**
- the separate polarizing surface has a known shape and/or known direction of polarization, or the separate polarizing surfaces have different polarizing properties; and
- the relative positioning of the polarizing surface or surfaces and the visual object is known;
and that it further comprises:
- means for determining the location of the visual object to be identified on the basis of said known relative positioning; and
- means for identifying the object in another way than on the basis of polarization.

16. System according to claim 15, **characterized in that** it comprises before the divider a delay element (13) which converts circularly polarized light into linearly polarized light.

17. System according to claim 15 or 16, **characterized in that** the divider (14) is a crystal provided with a dividing interface, a birefringent crystal or a semitransparent mirror.

18. System according to any of claims 15 to 17, **characterized in that** after the divider one of the two images passes through an attenuator (15) before reaching the image surface.

19. System according to any of claims 15 to 18, **characterized in that** the visual object (1) is a numeral, a series of numerals, a letter, a series of letters, a figure or any combination of these.

20. System according to any of claims 15 to 18, **characterized in that** the visual object (1b) is a one-dimensional code, and the polarized area (2c) is in the same line with the code.

21. System according to any of claims 15 to 18, **characterized in that** the visual object (1c) is a one-dimensional code consisting of concentric rings, and the polarized area (2d) is in the centre of said rings.

22. System according to claim 20 or 21, **characterized in that** the image produced on the image surfaces of the identifier is reduced in the direction perpendicular against the space slice under examination.

23. System according to any of claims 15 to 22, **characterized in that** the system comprises an additional lighting source with which that space is illuminated in which visual objects are presumed to exist.

## Patentansprüche

1. Verfahren zum Lokalisieren und Identifizieren eines sichtbaren Objekts, wobei:
das sichtbare Objekt (1; 1b; 1c) mit einer polarisierenden Oberfläche (2; 2b; 2c; 2d) markiert wird, die in dem Bereich des Objekts vorgesehen ist;
die Wahrnehmung des Vorhandenseins und die Lokalisierung der polarisierenden Oberfläche durch Nutzen der an der Oberfläche und in deren Umgebung vorherrschenden Beleuchtung auf der Grundlage des von der polarisierenden Oberfläche kommenden polarisierten Lichts (4a) erreicht wird;
**dadurch gekennzeichnet, daß**
die relative Positionierung der Oberfläche (2; 2b; 2c; 2d) und des sichtbaren Objekts (1; 1b; 1c) bekannt ist; und
die Lokalisierung des zu identifizierenden Objekts auf der Grundlage der bekannten relativen Positionierung erreicht wird, nach der das Objekt auf eine andere Weise als auf der Grundlage von Polarisation identifiziert wird.

2. Verfahren nach Anspruch 1,
**dadurch gekennzeichnet, daß**
die polarisierende Oberfläche (2; 2b; 2c; 2d) in die Nähe des sichtbaren Objekts (1; 1b; 1c) plaziert wird.

3. Verfahren nach Anspruch 1,
**dadurch gekennzeichnet, daß**
die polarisierende Oberfläche so plaziert wird, daß es das sichtbare Objekt (1; 1b; 1c) ganz oder teilweise bedeckt.

4. Verfahren nach einem der Ansprüche 1 bis 3,
**dadurch gekennzeichnet, daß**
als die polarisierende Oberfläche (2) eine Oberfläche mit asymmetrischer Form verwendet wird.

5. Verfahren nach einem der Ansprüche 1 bis 3,
**dadurch gekennzeichnet, daß**
zum Markieren des sichtbaren Objekts (1; 1b; 1c) polarisierende Oberflächen mit unterschiedlichen Polarisationseigenschaften verwendet werden.

6. Verfahren nach einem der Ansprüche 1 bis 5,
**dadurch gekennzeichnet, daß**
die Stellung des sichtbaren Objekts (1) mit Hilfe der Form und der Relativposition einer asymmetrischen Oberfläche (2) oder von unterschiedlichen polarisierenden Oberflächen zueinander identifiziert wird.

7. Verfahren nach einem der Ansprüche 1 bis 6,
**dadurch gekennzeichnet, daß**
der Abstand des sichtbaren Objekts (1; 1b; 1c) mit Hilfe einer polarisierenden Oberfläche bekannter Größe identifiziert wird.

8. Verfahren nach einem der Ansprüche 1 bis 7,
**dadurch gekennzeichnet, daß**
das Projektionsbild des sichtbaren Objekts (1) mit Hilfe der Form einer bekannten polarisierenden Oberfläche (2) oder der Form und der Relativposition von unterschiedlichen polarisierenden Oberflächen zueinander in eine Identifizierungsposition gedreht wird.

9. Verfahren nach einem der Ansprüche 1 bis 8,
**dadurch gekennzeichnet, daß**
die vertikal und horizontal polarisierten Komponenten (5, 6) des in die Identifizierungsvorrichtung einfallenden Lichts in zwei getrennte Bilder aufgeteilt werden, wobei, falls vorhanden, zum Wahrnehmen des polarisierten Lichts ein Vergleich der Bilder erfolgt und auf diese Weise das Vorhandensein des sichtbaren Objekts (1; 1b; 1c) festgestellt wird.

10. Verfahren nach einem der Ansprüche 1 bis 9,
**dadurch gekennzeichnet, daß**
falls zuerst nur teilweise polarisiertes Licht wahrgenommen wird, der jeweilige Ort durch Zoomen vergrößert wird und eine Untersuchung erfolgt, ob es in diesem Gebiet vollständig polarisiertes Licht gibt.

11. Verfahren nach einem der Ansprüche 1 bis 10,
**dadurch gekennzeichnet, daß**
das Verfahren zum Bestimmen der Stellung und des Ortes eines Körpers verwendet wird.

12. Verfahren nach einem der Ansprüche 1 bis 11,
**dadurch gekennzeichnet, daß**
mit Hilfe von zeitlich aufeinanderfolgenden Wahrnehmungen die mit dem Bewegungszustand eines Körpers verbundenen Größen festgestellt werden.

13. Verfahren nach einem der Ansprüche 1 bis 12,
**dadurch gekennzeichnet, daß**
Wahrnehmung und Identifizierung des sichtbaren Objekts anstatt mit sichtbarem Licht mit elektromagnetischer Strahlung erfolgt, deren Wellenlänge länger oder kürzer als sichtbares Licht ist.

14. Verfahren nach einem der Ansprüche 1 bis 13,
**dadurch gekennzeichnet, daß**
anstelle einer polarisierenden Platte/Folie eine Platte/Folie verwendet wird, deren durch diese reflektiertes oder durchgelassenes Strahlungsspektrum sich von dem Spektrum der Umgebungsstrahlung unterscheidet.

15. System zum Lokalisieren und Identifizieren eines sichtbaren Objekts (1; 1b; 1c) mit:
einer getrennten polarisierenden Oberfläche oder getrennten polarisierenden Oberflächen (2; 2b; 2c; 2d) im Bereich des sichtbaren Objekts (1; 1b; 1c);
Einrichtungen (9, 10, 11) zum Wahrnehmen des Vorhandenseins und zum Lokalisieren der polarisierenden Oberfläche oder Oberflächen durch Nutzen der an deren Oberfläche und in deren Umgebung vorherrschenden Beleuchtung auf der Grundlage des von der polarisierenden Oberfläche oder den polarisierenden Oberflächen kommenden polarisierten Lichts (4a), wobei die Einrichtungen ein Identifizierungsgerät (7) mit einer Bildidentifizierungseinrichtung (8) umfassen, in dem eine Teilereinrichtung (14) zum Aufteilen des durch die polarisierende Oberfläche oder die polarisierenden Oberflächen reflektierten polarisierten Lichts auf der Grundlage von Polarisation in zwei Teile vorgesehen ist;
**dadurch gekennzeichnet, daß**
die getrennte polarisierende Oberfläche eine bekannte Form und/oder eine bekannte Polarisationsrichtung aufweist oder die getrennten polarisierenden Oberflächen unterschiedliche Polarisationseigenschaften haben; und
die relative Positionierung der polarisierenden Oberfläche oder Oberflächen und des sichtbaren Objekts bekannt ist;
und daß es ferner umfaßt:
eine Einrichtung zum Bestimmen des Ortes des auf der Grundlage der bekannten relativen Positionierung zu identifizierenden sichtbaren Objekts; und
eine Einrichtung zur Identifizierung des Objekts auf eine andere Weise als auf der Grundlage von Polarisation.

16. System nach Anspruch 15,
**dadurch gekennzeichnet, daß**
es vor dem Teiler ein Verzögerungselement (13) aufweist, das zirkular polarisiertes Licht in linear polarisiertes Licht umwandelt.

17. System nach Anspruch 15 oder 16,
**dadurch gekennzeichnet, daß**
der Teiler (14) ein mit einer aufteilenden Grenzfläche versehener Kristall, ein doppelbrechender Kristall oder ein halbdurchlässiger Spiegel ist.

18. System nach einem der Ansprüche 15 bis 17,
**dadurch gekennzeichnet, daß**
nach dem Teiler eines von den zwei Bildern vor Erreichen der Bildoberfläche durch ein Dämpfungsglied (15) fällt.

19. System nach einem der Ansprüche 15 bis 18,
**dadurch gekennzeichnet, daß**
das sichtbare Objekt (1) eine Ziffer, eine Ziffernfolge, ein Buchstabe, eine Buchstabenfolge, eine Abbildung oder eine Kombination von diesen ist.

20. System nach einem der Ansprüche 15 bis 18,
**dadurch gekennzeichnet, daß**
das sichtbare Objekt (1b) ein eindimensionaler Code ist, wobei das polarisierte Gebiet (2c) sich auf derselben Linie wie der Code befindet.

21. System nach einem der Ansprüche 15 bis 18,
**dadurch gekennzeichnet, daß**
das sichtbare Objekt (1c) ein aus konzentrischen Ringen bestehender eindimensionaler Code ist, wobei sich das polarisierte Gebiet (2d) in der Mitte der Ringe befindet.

22. System nach Anspruch 20 oder 21,
**dadurch gekennzeichnet, daß**
das auf den Bildoberflächen der Identifizierungsvorrichtung erzeugte Bild in der Richtung senkrecht zu dem in Untersuchung befindlichen räumlichen Abschnitt verkleinert wird.

23. System nach einem der Ansprüche 15 bis 22,
**dadurch gekennzeichnet, daß**
das System eine zusätzliche Beleuchtungsquelle umfaßt, mit welcher der Raum, in dem vermutlich sichtbare Objekte vorhanden sind, beleuchtet wird.

## Revendications

1. Procédé de localisation et d'identification d'un objet visuel dans lequel:
l'objet visuel (1, 1b, 1c) est repéré avec une surface polarisante (2; 2b; 2c; 2d) disposée dans la région de l'objet;
l'observation de l'existence et la localisation de la surface polarisante, sont réalisées en utilisant l'éclairement prévalant sur la surface et dans son environnement, en fonction de la lumière polarisée (4a) provenant de ladite surface polarisante;
caractérisé en ce que:
le positionnement relatif de la surface (2; 2b; 2c; 2d) et de l'objet visuel (1; 1b; 1c) est connu; et
la localisation de l'objet à identifier est réalisée en fonction dudit positionnement relatif connu, après quoi, l'objet est identifié d'une autre manière qu'en fonction de la polarisation.

2. Procédé selon la revendication 1, caractérisé en ce que la surface polarisante (2; 2b; 2c; 2d) est placée à proximité de l'objet visuel (1; 1b; 1c).

3. Procédé selon la revendication 1, caractérisé en ce que la surface polarisante est placée de manière à couvrir totalement ou partiellement l'objet visuel (1; 1b; 1c).

4. Procédé selon l'une quelconque des revendications 1 à 3, caractérisé en ce qu'une surface de forme asymétrique est utilisée comme ladite surface polarisante (2).

5. Procédé selon l'une quelconque des revendications 1 à 3, caractérisé en ce que des surfaces polarisantes présentant des propriétés de polarisation différentes sont utilisées pour repérer l'objet visuel (1; 1b; 1c).

6. Procédé selon l'une quelconque des revendications 1 à 5, caractérisé en ce que l'orientation de l'objet visuel (1) est identifiée à l'aide de la forme et de la position relative par rapport à l'une ou l'autre d'une surface asymétrique (2) ou de différentes surfaces polarisantes.

7. Procédé selon l'une quelconque des revendications 1 à 6, caractérisé en ce que la distance par rapport à l'objet visuel (1; 1b; 1c) est identifiée à l'aide d'une surface polarisante de taille connue.

8. Procédé selon l'une quelconque des revendications 1 à 7, caractérisé en ce que l'image en projection de l'objet visuel (1) est tournée vers une position d'identification à l'aide de la forme d'une surface polarisante connue (2) ou de la forme et de la position relative de l'une par rapport à l'autre de différentes surfaces polarisantes.

9. Procédé selon l'une quelconque des revendications 1 à 8, caractérisé en ce que les composantes polarisées verticalement et horizontalement (5, 6) de la lumière incidente sur l'élément d'identification sont séparées en deux images distinctes, la comparaison desdites images étant réalisée pour observer la lumière polarisée, en sa présence, et l'existence de l'objet visuel (1; 1b; 1c) étant ainsi déterminée.

10. Procédé selon l'une quelconque des revendications 1 à 9, caractérisé en ce que si en premier, seule de la lumière partiellement polarisée est observée, la position respective est agrandie et un examen est réalisé pour déterminer si de la lumière entièrement polarisée est présente dans la zone.

11. Procédé selon l'une quelconque des revendications 1 à 10, caractérisé en ce que le procédé est utilisé afin de déterminer l'orientation et la localisation d'un corps.

12. Procédé selon l'une quelconque des revendications 1 à 11, caractérisé en ce que, à l'aide d'observations consécutives dans le temps, les grandeurs associées à l'état de mouvement d'un corps sont trouvées.

13. Procédé selon l'une quelconque des revendications 1 à 12, caractérisé en ce que l'observation et l'identification de l'objet visuel sont réalisées en utilisant un rayonnement électromagnétique dont la longueur d'onde est supérieure ou inférieure à celle de la lumière visible, à la place de la lumière visible.

14. Procédé selon l'une quelconque des revendications 1 à 13, caractérisé en ce que, à la place d'une plaque/feuille polarisante, une plaque/feuille dont le spectre de rayonnement réfléchi ou transmis diffère du spectre du rayonnement ambiant est utilisée.

15. Dispositif de localisation et d'identification d'un objet visuel (1, 1b, 1c) comprenant:
dans la région de l'objet visuel (1, 1b, 1e) une surface polarisante distincte ou des surfaces polarisantes distinctes (2; 2b; 2c; 2d);
un moyen (9, 10, 11) destiné à observer l'existence de la surface ou des surfaces polarisantes et à les localiser en utilisant l'éclairement prévalant sur la surface de celles-ci et dans leur environnement, en fonction de la lumière polarisée (4a) provenant de ladite surface ou desdites surfaces polarisantes, ledit moyen comprenant un dispositif d'identification (7) comportant un moyen d'identification d'image (8), dans lequel est présent un moyen de séparation (14) destiné à séparer la lumière polarisée réfléchie par la surface ou les surfaces polarisées en deux parties en fonction de la polarisation;
caractérisé en ce que:
la surface polarisante distincte présente une forme connue et/ou direction de polarisation connue, ou les surfaces polarisantes distinctes présentent des propriétés de polarisation différentes; et
le positionnement relatif de la surface ou des surfaces polarisantes par rapport à l'objet visuel est connu;
et en ce qu'il comprend, en outre:
un moyen destiné à déterminer la position de l'objet visuel à identifier en fonction dudit positionnement relatif connu; et
un moyen destiné à identifier l'objet d'une autre manière qu'en fonction de la polarisation.

16. Dispositif selon la revendication 15, caractérisé en ce qu'il comprend, avant le séparateur, un élément à retard (13), qui transforme la lumière polarisée circulairement en lumière polarisée linéairement .

17. Dispositif selon la revendication 15 ou 16, caractérisé en ce que le séparateur (14) est un cristal comportant une interface de séparation, un cristal biréfringent ou un miroir senti-transparent.

18. Dispositif selon l'une quelconque des revendications 15 à 17, caractérisé en ce que, après le séparateur, une des deux images passe à travers un atténuateur (15) avant d'atteindre la surface de l'image.

19. Dispositif selon l'une quelconque des revendications 15 à 18, caractérisé en ce que l'objet visuel (1) est un chiffre, une série de chiffres, une lettre, une série de lettres, une image ou une combinaison quelconque de ceux-ci.

20. Dispositif selon l'une quelconque des revendications 15 à 18, caractérisé en ce que l'objet visuel (1b) est un code unidimensionnel, et la zone polarisée (2c) est alignée avec le code.

21. Dispositif selon l'une quelconque des revendications 15 à 18, caractérisé en ce que l'objet visuel (1c) est un code unidimensionnel consistant en anneaux concentriques, et la zone polarisée (2d) est située au centre desdits anneaux.

22. Dispositif selon la revendication 20 ou 21, caractérisé en ce que l'image produite sur les surfaces d'image de l'élément d'identification est réduite dans la direction perpendiculaire à la tranche d'espace examinée.

23. Dispositif selon l'une quelconque des revendications 15 à 22, caractérisé en ce que le dispositif comprend une source d'éclairage supplémentaire avec laquelle cet espace, dans lequel des objets visuels sont présumés exister, est éclairé.
